Europäisches Patentamt

(19) **European Patent Office**

**Office européen des brevets**

(11) Veröffentlichungsnummer: **0 245 737**
**B1**

(12) # EUROPÄISCHE PATENTSCHRIFT

(45) Veröffentlichungstag der Patentschrift:
**23.08.89**

(21) Anmeldenummer: **87106405.1**

(22) Anmeldetag: **04.05.87**

(51) Int. Cl.⁴: **F01N 3/28**, B01J 35/04

(54) Wabenkörper, insbesondere Katalysator-Trägerkörper, mit gegensinnig verschlungenen Metallblechschichten und Verfahren zu seiner Herstellung.

(30) Priorität: **12.05.86 DE 3615902**

(43) Veröffentlichungstag der Anmeldung:
**19.11.87 Patentblatt 87/47**

(45) Bekanntmachung des Hinweises auf die Patenterteilung:
**23.08.89 Patentblatt 89/34**

(84) Benannte Vertragsstaaten:
**AT BE CH DE ES FR GB GR IT LI LU NL SE**

(56) Entgegenhaltungen:
**DE-A- 2 727 967**
**DE-A- 3 341 868**
**GB-A- 2 079 174**

(73) Patentinhaber: **INTERATOM Gesellschaft mit beschränkter Haftung, Friedrich-Ebert-Strasse, D-5060 Bergisch-Gladbach 1(DE)**

(72) Erfinder: **Cyron, Theodor, Dipl.-Ing., Kurt-Schumacher-Strasse 12, D-5060 Bergisch Gladbach 1(DE)**

(74) Vertreter: **Mehl, Ernst, Dipl.-Ing. et al, Postfach 22 13 17, D-8000 München 22(DE)**

**Beschreibung**

Wabenkörper, insbesondere Katalysator-Trägerkörper, mit gegensinnig verschlungenen Metallblechschichten und Verfahren zu seiner Herstellung.

Die vorliegende Erfindung betrifft einen Wabenkörper, insbesondere Katalysator-Trägerkörper, nach dem Oberbegriff des Anspruchs 1, wie er vorzugsweise bei Kraftfahrzeugen angewendet wird.

Solche Wabenkörper, z. B. als Katalysator-Trägerkörper und die bei diesem Aufbau auftretenden Probleme bez. Dehnung und thermischer Belastung sind beispielsweise in der EP-A-0 121 174 und der DE-A-33 12 944 beschrieben. Für spiralförmig gewickelte und untereinander verlötete Blechlagen sind verschiedene Lösungen zur Beherrschung der Dehnungsprobleme beschrieben.

Aufgabe der vorliegenden Erfindung ist es, die Probleme bez. Dehnung und Temperaturverteilung durch einen geeigneten Aufbau zu beherrschen, insbesondere um die Lebensdauer solcher Katalysator-Trägerkörper auch unter extremen Belastungen zu erhöhen.

Zur Lösung dieser Aufgabe wird ein Wabenkörper gemäß dem Anspruch 1 vorgeschlagen, welcher aus einem Stapel von gegensinnig verschlungenen Blechen besteht. Dieser Aufbau führt durch die verschlungene Form der Bleche und dadurch, daß diese an ihren Enden mit dem Mantelrohr fügetechnisch verbunden werden können, zu einem sehr stabilen, aber bei Dehnungen auch sehr elastischen Aufbau.

Wie sich aus Anspruch 2 ergibt, muß der Stapel, welcher zu dem späteren Wabenkörper verschlungen wird, im Querschnitt den gleichen Flächeninhalt haben wie der spätere Wabenkörper. Dadurch ergibt sich je nach der gewählten Höhe des Stapels für runde Querschnittsformen immer eine bestimmte Länge. Um besonders elastische Formen zu erhalten, sollte der Stapel vorzugsweise eine Höhe von einem Drittel bis einem Fünftel oder sogar einem Neuntel des Durchmessers des herzustellenden Wabenkörpers haben. Andere Höhenverhältnisse sind jedoch problemlos möglich. Wie im Anspruch 3 angegeben, ist es gemäß dem Erfindungsgedanken auch möglich, langgestreckte runde oder auch eckige Querschnitte von Wabenkörpern auf ähnliche Weise mit strukturierten Blechen zu füllen. Der Unterschied bei der Herstellung und dem späteren Aussehen liegt hauptsächlich in der Anordnung der Fixpunkte und ggf. in der Form des Stapels, wie anhand der Zeichnung näher erläutert wird.

Für bestimmte Anwendungsfälle ist es gemäß Anspruch 4 möglich, die erfindungsgemäßen Wabenkörper zusätzlich stirnseitig ganz oder zumindest in Teilbereichen untereinander zu verlöten. Da nicht in allen Fällen sichergestellt werden kann, daß jede einzelne Lage an beiden Enden das Mantelrohr berührt, kann es hilfreich sein, in einem schmalen Randzonenbereich die strukturierten Bleche zusätzlich untereinander zu verlöten, um eine sichere Halterung zu gewährleisten.

Gemäß dem Anspruch 5 werden auch bei der vorliegenden Erfindung abwechselnde Lagen von glatten und gewellten Blechen bevorzugt. Dies ist jedoch nur eine von vielen möglichen Ausführungsformen, da auch andere bekannte Strukturen, z. B. Doppelwellenstrukturen oder Blechlagen mit omegaförmigen Wellungen verwendbar sind. Bei Verwendung glatter und gewellter Bleche jedoch ist es gemäß Anspruch 6 vorteilhaft, die glatten Bleche geringfügig länger herzustellen als die gewellten Bleche, so daß die glatten Bleche an beiden Seiten über die gewellten Bleche um eine geringe Länge hinausragen. Die Schichtung eines Stapels mit solchen Blechen erfordert natürlich mehr Aufwand als bei Blechen gleicher Länge, kann aber leicht bewerkstelligt werden.

Dafür gelingt es bei einer solchen Anordnung wesentlich leichter, die Enden aller gewellten und glatten Blechlagen mit dem Mantelrohr fügetechnisch zu verbinden, da sich nicht mehr Enden von gewellten Blechlagen zwischen das Mantelrohr und Enden von glatten Blechlagen schieben können.

Ein gleicher Effekt kann gemäß Anspruch 7 auch dadurch erreicht werden, daß die gewellten Bleche an ihren Enden gerade Abschnitte aufweisen, welche etwa mittig zwischen den angrenzenden glatten Blechen verlaufen. Auch bei dieser Ausgestaltung berühren die Enden aller Blechlagen gleichförmig das Mantelrohr, und zwar schmiegen sie sich vorzugsweise an dieses an, wodurch eine feste Verbindung erleichtert wird.

Eine weitere Ausführungsform der Erfindung wird in Anspruch 8 vorgeschlagen. Eine derartige Anordnung ist im Prinzip für Filter aus der EP-A-0 025 584 bekannt. Durch Verwendung abwechselnd angeordneter gewellter Bleche, deren Wellung untereinander einen kleinen Winkel bildet, lassen sich verschiedene Vorteile erreichen, beispielsweise eine gewisse Quervermischung zwischen den einzelnen Abgaskanälen und eine geringfügig unregelmäßige Stirnfläche, welche den dort auftretenden Druckverlust über eine kurze Länge verteilt. Die Anwendung eines solchen Aufbaues war bisher für spiralig gewickelte Katalysator-Trägerkörper kaum zu verwirklichen, da eine schräge Wellung äußerst schwierig herzustellen ist. Ineinander greifende Zahnwalzen mit einer schrägen Zahnung verformen nämlich im allgemeinen einen Blechstreifen sehr stark, so daß längere Stücke mit einer feinen gleichmäßigen schrägen Wellung kaum herstellbar sind. Bei der vorliegenden Erfindung werden jedoch nur relativ kurze Stücke benötigt, welche sogar von einem einzigen Zahnwalzenpaar hergestellt werden können. Dazu brauchen lediglich Bleche mit vorbestimmter Länge jeweils abwechselnd mit geringfügiger Schrägstellung zu der einen bzw. anderen Seite in ein genügend breites Zahnwalzenpaar eingeführt zu werden, wobei hinter dem Zahnwalzenpaar diese Bleche wieder zu einem Stapel zusammengeführt werden. Im übrigen ergeben sich praktisch keine Veränderungen im Herstellungsverfahren gegenüber anders strukturierten Blechen, da der sehr kleine Winkel zwischen den Wellungen die Handhabung ansonsten kaum beeinflußt.

In Anspruch 9 wird weiterhin vorgeschlagen, daß die Bleche durch etwa in Umfangsrichtung verlaufende Schweißnähte an ihren Enden mit dem Mantelrohr verbunden sein sollen. Dabei kann die Haltbarkeit dieser Verbindungen dadurch verstärkt werden, daß durch geeignete Wahl der Schweißparameter die Schweißwurzel etwas nach innen einsinkt, so daß zusätzlich eine Formschlußverbindung zwischen dem Mantelrohr und den Enden der Bleche entsteht.

Für bestimmte Anwendungsfälle werden ggf. Querschnittsformen benötigt, welche sich nach dem bisher beschriebenen System nicht vollständig mit einem gegensinnig verschlungenen Blechstapel ausfüllen lassen. Unregelmäßige Querschnittsformen, insbesondere aber auch ovale Querschnittsformen, welche ein günstigeres Stabilitätsverhalten bei relativ hohem Innendruck aufweisen, lassen sich jedoch erfindungsgemäß herstellen, wenn Füllstücke verwendet werden, welche die überschüssige Querschnittsfläche ausfüllen und ihrerseits wiederum aus strukturierten Blechen gewickelt oder geschichtet sein können.

Gemäß Anspruch 11 läßt sich bei den erfindungsgemäßen Wabenkörpern auch eine quasi-rund-konische (oder tonnenförmige, bzw. halbkugelförmige) Stirnseitenform erreichen. Eine solche Form der Stirnseiten ist strömungstechnisch für manche Anwendungen günstiger als eine ebene Stirnfläche. Zwar läßt sich nicht genau die gleiche Form erreichen, wie sie durch teleskopartiges Auseinanderziehen bei spiralig gewickelten Katalysator-Trägerkörpern entsteht, jedoch ist ein ähnlicher Effekt erreichbar, und zwar um so leichter, je kleiner die Höhe des für die Herstellung eines solchen Wabenkörpers verwendeten Blechstapels ist.

In den Ansprüchen 12, 13, 14, 15 und 16 werden beispielhaft einige Herstellungsverfahren zur Herstellung der erfindungsgemäßen Wabenkörper beschrieben. Anspruch 12 beschreibt die Herstellung eines Wabenkörpers mit rundem Querschnitt, während Anspruch 13 die modifizierte Herstellung für langgestreckte Querschnitte angibt. Im Anspruch 14 wird zusätzlich ein Verfahren zur Herstellung von Wabenkörpern mit ovaler oder unregelmäßiger Querschnittsfläche angegeben. Bis auf das Einlegen geeignet geformter Füllstücke in den als Ausgangsmaterial dienenden Blechstapel unterscheidet sich das Verfahren nicht von den bereits beschriebenen. Grundsätzlich wäre es auch möglich, die Füllstücke mittels einer geeigneten Einführvorrichtung nach dem gegensinnigen Verschlingen des Blechstapels vorzunehmen.

Eine weitere Herstellungsvariante ist im Anspruch 15 angegeben. Zunächst wird ein Wabenkörper mit rundem Querschnitt hergestellt, wie in den Merkmalen a, b und c des Anspruchs 12 beschrieben. Die Enden der strukturierten Bleche können dann fügetechnisch und/oder formschlüssig nur etwa in der Mitte des Mantelrohres in Umfangsrichtung befestigt werden, vorzugsweise durch eine in Umfangsrichtung um das Mantelrohr verlaufende Schweißnaht, falls die ohnehin vorhandenen Reibungskräfte für die folgenden Schritte nicht ausreichen. Anschließend wird mit einem Stempel oder dergleichen der Zentralbereich des so gebildeten Wabenkörpers zu einer Stirnseite herausgedrückt.

Die einzelnen Bleche drehen sich dabei ggf. um die einzige Befestigungsnaht in ihrer Mitte, reißen jedoch nicht los, so daß für die Verformung erhebliche Kräfte aufgewendet werden können. Es entsteht eine etwa rund-konische, halbkugelförmige oder tonnenförmige Stirnseite, wobei die einzelnen Kanäle nicht mehr ganz exakt in axialer Richtung des Katalysator-Trägerkörpers verlaufen, was jedoch keine Nachteile mit sich bringt. Der so verformte Wabenkörper wird durch (weitere) fügetechnische und/oder formschlüssige Verbindungen der Bleche zum Mantelrohr befestigt.

Hervorzuheben ist noch, daß bei allen erfindungsgemäß hergestellten Katalysator-Trägerkörpern im Prinzip beide Enden jeder Blechlage das Mantelrohr berühren, wodurch eine beidseitige fügetechnische Verbindung jeder Blechlage mit dem Mantelrohr möglich wird. Untereinander brauchen die Blechlagen dadurch nicht mehr unbedingt verbunden zu werden, da sie sich wegen ihrer gegensinnigen Verschlingung trotzdem kaum aus ihrer Lage bringen lassen, wenn sie über die ganze Länge oder an mehreren Stellen ihrer Mantelberührungslinie fügetechnisch fest verbunden sind. Eine fügetechnische Verbindung der Enden nur mit dem Mantelrohr bringt gemäß Anspruch 16 weitere Vorteile bei der Herstellung mit sich. So braucht beispielsweise nur noch die Innenseite des Mantelrohres mit Lot versehen zu werden, z. B. in Form von Lotpulver, -Paste, oder -Folie, und beim Lötvorgang ist auch nur eine Aufwärmung des Mantelrohres auf Löttemperatur nötig. Während sich Wabenstrukturen insgesamt sehr schlecht aufheizen lassen, kann das Mantelrohr allein sehr viel leichter auf Löttemperatur gebracht werden, beispielsweise durch Induktionsspulen oder Wärmebestrahlung von außen. Dies ist, abgesehen von der größeren Elastizität des erfindungsgemäßen Wabenkörpers ein weiterer wesentlicher Vorteil für die Herstellung.

Ausführungsbeispiele der Erfindung werden anhand von schematischen Querschnitten bzw. Stirnansichten erfindungsgemäßer Wabenkörper näher erläutert. Es zeigen

Figur 1 einen Blechstapel zu Beginn des Herstellungsprozesses,

Figur 2 einen daraus durch gegensinnige Verschlingung hergestellten Katalysator-Trägerkörper,

Figur 3 schematisch den Aufbau eines Katalysator-Trägerkörpers mit langgestrecktem Querschnitt,

Figur 4 ebenfalls einen Katalysator-Trägerkörper mit langgestrecktem Querschnitt aber mit diagonal verlaufenden, verschlungenen Blechschichten,

Figur 5 den Ausschnitt V aus dem Randbereich von Figur 4,

Figur 6 den Ausschnitt VI aus dem Randbereich von Figur 1,

Figur 7 zwei Blechlagen, deren Wellung einen kleinen Winkel untereinander bildet,

Figur 8 den Aufbau eines Katalysator-Trägerkörpers mit ovalem Querschnitt,

Figur 9 den Aufbau des Füllstückes 81 aus Figur 8,

Figuren 10, 11, 12 alternative Ausgestaltungen des Füllstückes und

Figur 13 den Aufbau eines Katalysator-Trägerkörpers mit rechteckigem Querschnitt.

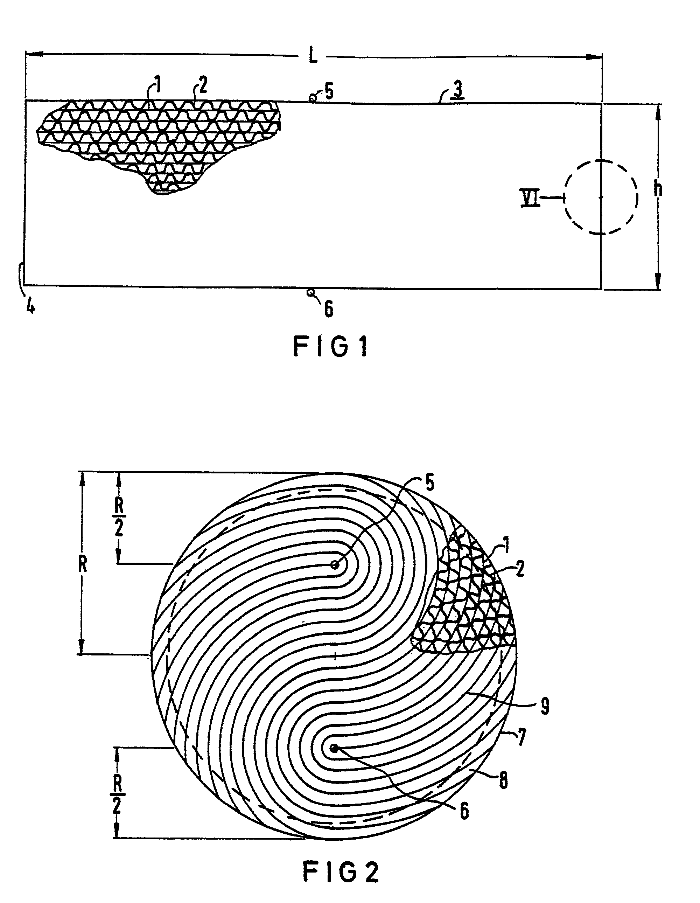

Figur 1 zeigt einen aus abwechselnden Lagen glatter 1 und gewellter 2 Bleche geschichteten Stapel mit der Höhe h und der Länge L. Je nach Fertigungsmethode und gewünschtem, herzustellendem Querschnitt braucht der Stapel zu Beginn des Herstellungsvorganges nicht unbedingt zu einem Quader mit ebenen Seitenflächen 4 geschichtet zu sein. Andere Formen, z. B. Parallelogramm oder dergleichen, können bei der Herstellung vorteilhafter sein. Ein solcher Stapel 3 wird mittels einer Gabel oder ähnlich fixierend wirkenden Vorrichtung an den Fixpunkten 5, 6 gefaßt und durch Drehen der Gabel bzw. Umbiegen der Stapelenden gegensinnig verschlungen. Auf diese Weise entsteht eine Form, wie sie schematisch in Figur 2 dargestellt ist. So verschlungene Bleche lassen sich in einem Mantelrohr 7 fügetechnisch befestigen, wodurch ein elastischer, aber doch stabiler Katalysator-Trägerkörper entsteht. Grundsätzlich kann das Mantelrohr auch beispielsweise aus mehreren Segmenten bestehen. Zur Verbesserung der Stabilität können die einzelnen Bleche 1, 2 stirnseitig, vorzugsweise in einem ringförmigen Randzonenbereich 8 untereinander verlötet sein. Auf diese Weise entsteht ein stabiles Gefüge auch dann, wenn einzelne Lagen aufgrund von Längenabweichungen das Mantelrohr nicht berühren sollten.

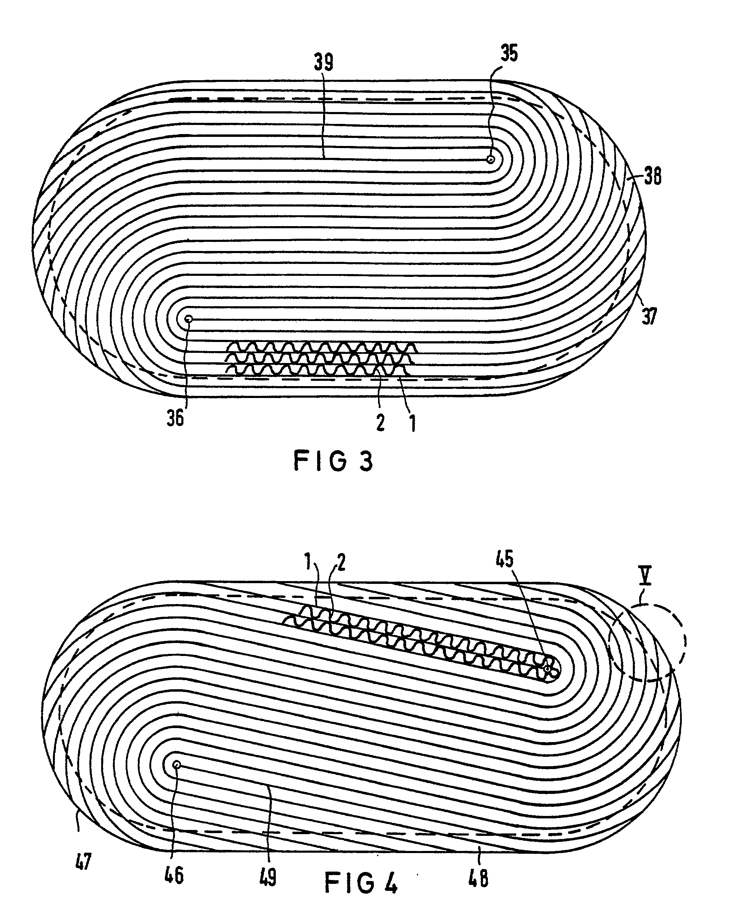

In Figur 3 ist ein entsprechend hergestellter Katalysator-Trägerkörper mit langgestreckter Querschnittsfläche dargestellt, wobei dieser aus einem entsprechend längeren Stapel von Blechen 1, 2 herstellbar ist. Lediglich die Fixpunkte 35, 36 müssen gegeneinander versetzt gewählt werden, wodurch sich direkt die gewünschte Querschnittsform ergibt, welche in ein entsprechendes Mantelrohr 37 hineinpaßt. Wiederum können die Stirnseiten ganz oder teilweise, insbesondere im Randzonenbereich 38 verlötet sein.

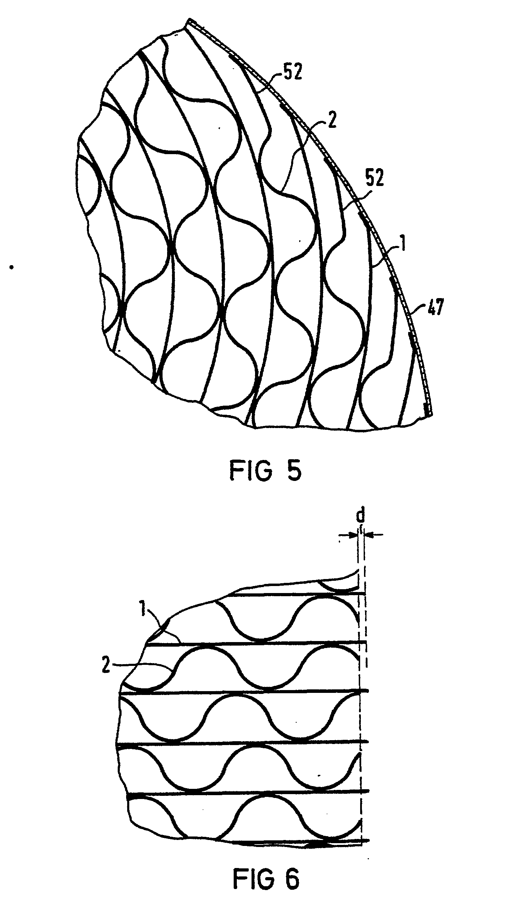

Eine andere, unter Elastizitäts- und Stabilitätsüberlegungen noch günstigere Anordnungen der Blechlagen 1, 2 in einem langgestreckten Querschnitt ist in Figur 4 dargestellt. Auch diese Anordnung läßt sich analog den bisher beschriebenen Verfahren aus einem Blechstapel durch Angreifen an gegeneinander versetzten Fixpunkten 45, 46 herstellen. Der Stapel kann ggf. dabei allerdings zusätzlich einen etwa parallelogrammförmigen Querschnitt aufweisen. Auch bei der in Figur 4 gezeigten Ausführung brauchen die einzelnen Lagen nur mit ihren Enden an dem Mantelrohr 47 fügetechnisch verbunden zu werden. Eine stirnseitige Verlötung, insbesondere im Randzonenbereich 48 ist jedoch möglich.

Es sei darauf hingewiesen, daß bei den Ausführungsbeispielen der Figuren 2, 3 und 4 im allgemeinen die glatten äußeren Blechlagen 9, 39 bzw. 49 des Ausgangsstapels gegeneinander gefaltet werden, so daß diese Schicht aus einer doppelten glatten Blechlage besteht. Dies kann natürlich prinzipiell vermieden werden, indem die oberste bzw. unterste Blechlage des Stapels direkt neben den Fixpunkten abgeschnitten wird. Von großer Bedeutung ist eine solche Maßnahme jedoch nicht, da die Bleche ohnehin sehr dünn sind.

In Figur 5 ist der Ausschnitt V aus dem Randbereich der Figur 4 vergrößert dargestellt. Gemäß diesem Ausführungsbeispiel weisen die gewellten Bleche 2 an ihren Enden gerade Abschnitte 52 auf, welche etwa mittig zwischen den angrenzenden glatten Blechen 1 verlaufen. Durch diese Ausgestaltung haben die Enden aller Bleche den gleichen Spielraum für eine Berührung mit dem Mantelrohr, so daß sie sich an dieses anschmiegen und eine feste Verbindung zum Mantelrohr bei verschiedenen Berührungswinkeln leichter bewerkstelligt werden kann.

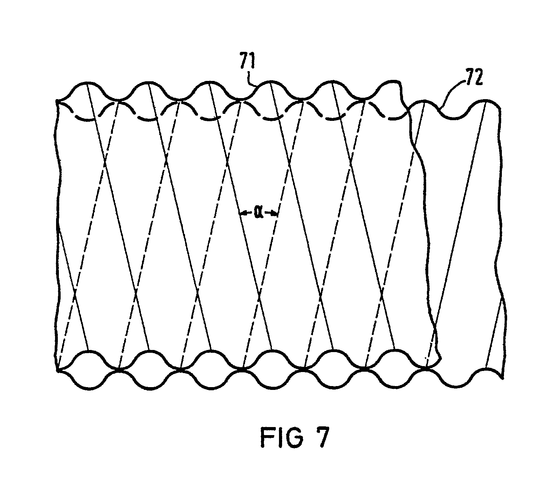

Das gleiche Ergebnis läßt sich durch eine Ausführungsform gemäß Figur 6, welche den Ausschnitt VI aus dem Randbereich der Figur 1 zeigt, erreichen. Durch Verkürzung der gewellten Blechlagen 2 gegenüber den glatten Blechlagen 1 um einen Abstand d wird ebenfalls erreicht, daß alle Enden der Blechlagen das Mantelrohr berühren und sich daran anschmiegen können. Um einen gleichmäßigen Stapel aus längeren glatten Blechen 1 und kürzeren gewellten Blechen 2 herstellen zu können, kann es vorteilhaft sein, die glatten Bleche an ihren Enden mit Nuten der Tiefe d zu versehen, in welche beim Stapeln Querstäbe eingesetzt werden, zwischen denen die gewellten Bleche 2 ihre genaue Position einnehmen können.

Figur 7 zeigt eine alternative Struktur für die Blechlagen des erfindungsgemäßen Katalysator-Trägerkörpers. Danach können beide Blechlagen 71, 72 Wellungen aufweisen, welche untereinander einen kleinen Winkel α bilden. Diese Ausführungsform hat den Vorteil, daß keine glatten Blechlagen als Zwischenlagen benötigt werden und daß zusätzlich die durch die Wellungen gebildeten Kanäle sich untereinander kreuzen und miteinander kommunizieren, was zu einer Verwirbelung der Gase und damit einer besseren Kontaktierung der Oberflächen führt.

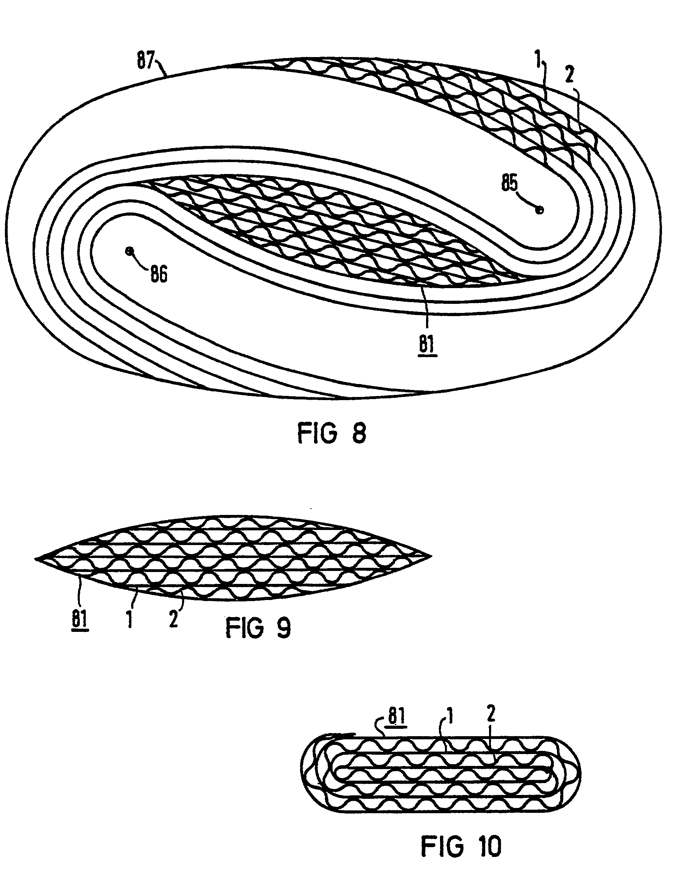

In Figur 8 ist ein weiteres Ausführungsbeispiel der Erfindung dargestellt, welches deutlich macht, daß auch ovale oder kompliziertere Querschnitte nach dem erfindungsgemäßen Verfahren mit Blechlagen ausgefüllt werden können. Wiederum besteht der Katalysator-Trägerkörper prinzipiell aus einem Stapel gegensinnig verschlungener glatter 1 und gewellter 2 Bleche. Die Verschlingung erfolgt analog zu dem in Figur 4 dargestellten Ausführungsbeispiel um die Fixpunkte 85, 86. Um jedoch den ganzen Querschnitt ausfüllen zu können, wird zusätzlich ein Füllstück 81 benötigt, welches vor oder nach der Verschlingung des Stapels in diesen eingesetzt wird. Ein solches Füllstück 81 muß entsprechend der noch aufzufüllenden Querschnittsfläche vorgeformt sein und kann seinerseits wiederum aus strukturierten Blechen bestehen. Auf diese Weise läßt sich fast jeder Querschnitt innerhalb eines Mantelrohres 87 ausfüllen.

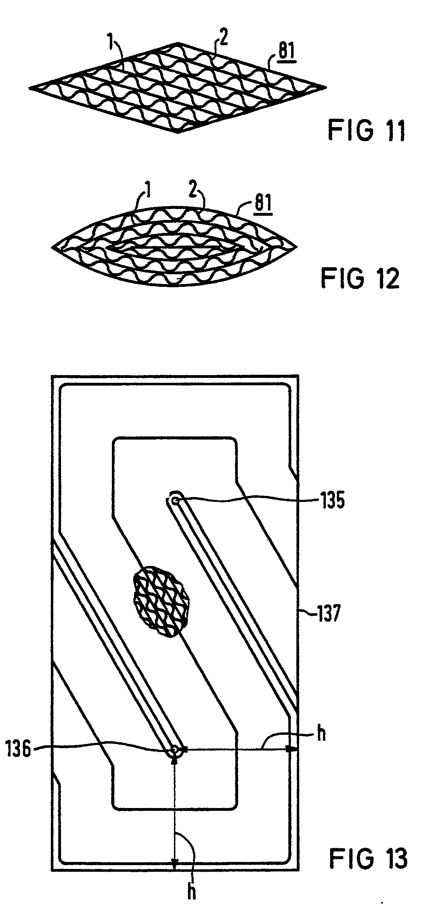

In den Figuren 9, 10, 11 und 12 werden geeignete Füllstücke dargestellt. Das in Figur 9 gezeigte Füllstück 81 besteht aus geschichteten, unterschiedlich langen glatten 1 und gewellten 2 Blechstreifen. In Figur 10 ist das Füllstück aus spiralig übereinander gewickelten glatten 1 und gewellten 2 Blechstreifen hergestellt. Die Figuren 11 und 12 zeigen weitere als Füllstücke geeignete Varianten.

In Figur 13 ist beispielhaft für die Vielzahl der gemäß vorliegender Erfindung ausfüllbaren Querschnitte eine Stirnansicht eines im Querschnitt rechteckigen Wabenkörpers gezeigt. Die Fixpunkte 135, 136 liegen wiederum versetzt zu dem Stapel und haben sowohl zu ihrer jeweiligen Schmalseite wie zu beiden Längsseiten den gleichen Abstand h. Zur Herstellung eines solchen Querschnittes sind vor dem Einsetzen in das Mantelrohr 137 jedoch mehrere Verformungsschritte des Blechstapels nötig.

Erfindungsgemäß aufgebaute Katalysator-Trägerkörper sind unempfindlich gegen thermische Wechselbelastungen und können daher bei verlängerter Lebensdauer im motornahen Bereich eingesetzt werden.

**Patentansprüche**

1. Wabenkörper, insbesondere Katalysator-Trägerkörper, aus lagenweise angeordneten zumindest teilweise strukturierten Blechen (1, 2), die eine Vielzahl von für Gase durchströmbaren Kanälen bilden, wobei die Bleche von einem ggf. aus mehreren Segmenten bestehenden Mantelrohr (7) umgeben und mit diesem fügetechnisch verbunden sind, gekennzeichnet durch folgende Merkmale:
   a) Der Wabenkörper besteht aus einem Stapel (3) von zumindest teilweise strukturierten Blechen (1, 2).
   b) Die Enden des Stapels sind jeweils gegensinnig um mindestens zwei Fixpunkte (5, 6; 35, 36; 45, 46; 85, 86) verschlungen.
   c) Die Enden der Bleche (1, 2) sind fügetechnisch und/oder formschlüssig mit dem Mantelrohr (7) verbunden.
2. Wabenkörper nach Anspruch 1 für runde Querschnittformen, dadurch gekennzeichnet, daß der Abstand der Fixpunkte (5, 6) und damit die Höhe (h) des Stapels (3) und die Länge (L) des Stapels (3) in bezug auf den Radius (R) des Wabenkörpers folgenden Bedingungen gehorchen:

$$a) \quad h = \frac{2R}{n}$$

$$b) \quad L = \frac{n}{2} \cdot R \cdot \pi$$

mit n ≥ 2, vorzugsweise 9 ≥ n ≥3, wobei n keine ganze Zahl zu sein braucht.
3. Wabenkörper nach Anspruch 1, dadurch gekennzeichnet, daß für langgestreckte Querschnitte die Fixpunkte (35, 36; 85, 86; 135, 136) gegeneinander versetzt zu dem Stapel (3) liegen.
4. Wabenkörper nach Anspruch 1, 2 oder 3, dadurch gekennzeichnet, daß die zumindest teilweise strukturierten Bleche (1, 2) stirnseitig zumindest in Teilbereichen untereinander verlötet sind, vorzugsweise in einem schmalen Randzonenbereich 38;48).
5. Wabenkörper nach Anspruch 1, 2, 3 oder 4, dadurch gekennzeichnet, daß die zumindest teilweise strukturierten Bleche (1, 2) abwechselnd angeordnete glatte (1) und gewellte (2) Bleche sind.
6. Wabenkörper nach Anspruch 5, dadurch gekennzeichnet, daß die glatten Bleche (1) geringfügig länger als die gewellten Bleche (2) sind und an beiden Seiten über die gewellten Bleche (2) um eine geringe Länge (d) hinausragen.
7. Wabenkörper nach Anspruch 5, dadurch gekennzeichnet, daß die gewellten Bleche (2) an ihren Enden gerade Abschnitte (52) aufweisen, welche etwa mittig zwischen den angrenzenden glatten Blechen (1) verlaufen.
8. Wabenkörper nach Anspruch 1, 2, 3 oder 4, dadurch gekennzeichnet, daß die zumindest teilweise strukturierten Bleche abwechselnd angeordnete gewellte Bleche (71, 72) sind, deren Wellung untereinander einen kleinen Winkel ($\alpha$) bildet, so daß sich jeweils einige der durch die Wellungen gebildete Kanäle untereinander kreuzen unter dem Winkel ($\alpha$), vorzugsweise $\alpha$ = 5° bis 30°.
9. Wabenkörper nach einem der vorhergehenden Ansprüche, dadurch gekennzeichnet daß die Bleche (1, 2; 71, 72) durch etwa in Umfangsrichtung verlaufende Schweißnähte an ihren Enden mit dem Mantelrohr verbunden sind, wobei die Haltbarkeit durch etwas nach innen ragende Schweißnähte wegen deren Formschluß noch verstärkt werden kann.
10. Wabenkörper nach einem der vorhergehenden Ansprüche, dadurch gekennzeichnet, daß für ovale oder unregelmäßige Querschnittsformen, welche nicht vollständig mit einem gegensinnig verschlungenen Blechstapel ausfüllbar sind, Füllstücke (81) in den Wabenkörper integriert sind, welche ihrerseits wiederum aus zumindest teilweise strukturierten Blechen (1, 2) gewickelt oder geschichtet sind.
11. Wabenkörper nach einem der Ansprüche 1 bis 8, dadurch gekennzeichnet, daß die Bleche (1, 2; 71, 72) im Zentralbereich des Wabenkörpers zu einer Stirnseite herausgedrückt sind, so daß eine quasi-rund-konische Stirnseitenform vorhanden ist.
12. Verfahren zur Herstellung eines Wabenkörpers, insbesondere Katalysator-Trägerkörpers nach Anspruch 1 oder 2, gekennzeichnet durch folgende Merkmale:
   a) Eine geeignete Anzahl zumindest teilweise strukturierter Bleche (1, 2) wird zu einem Stapel (3) geschichtet.
   b) Mittels einer oder zweier gabelartiger Vorrichtung(en), welche an der Oberseite und Unterseite des Stapels (3) liegenden Fixpunkten (5, 6) angreift (bzw. angreifen), wird der Stapel gegensinnig verschlungen.
   c) Der verschlungene Stapel wird in ein Mantelrohr (7) eingesetzt oder mit einem solchen umwickelt.
   d) Die Enden der zumindest teilweise strukturierten Bleche (1, 2) werden fügetechnisch und/oder formschlüssig mit dem Mantelrohr (7) verbunden, vorzugsweise verlötet.
13. Verfahren zur Herstellung eines Wabenkörpers, insbesondere Katalysator-Trägerkörpers, nach Anspruch 3, gekennzeichnet durch folgende Merkmale:

a) Zumindest teilweise strukturierte Bleche (1, 2) werden zu einem Stapel (3) gestapelt, wobei dieser Stapel einen etwa rechteckigen oder parallelogrammförmigen Querschnitt aufweist.

b) Mittels einer an gegeneinander versetzten an der Oberseite und Unterseite des Stapels (3) liegenden Fixpunkten (35, 36; 45, 46; 135, 136) angreifenden Gabel oder dergleichen werden die Metallblechschichten gegensinnig verschlungen und anschließend mit einen Mantelrohr (37; 47) versehen und verbunden.

14. Verfahren zur Herstellung eines Wabenkörpers, insbesondere Katalysator-Trägerkörpers, nach Anspruch 10, gekennzeichnet durch folgende Merkmale:

a) Eine geeignete Anzahl zumindest teilweise strukturierter Bleche (1, 2) wird zu einem Stapel (3) geschichtet, wobei in den Stapel ein oder mehrere Füllstücke (81) eingelegt werden, vorzugsweise etwa im mittleren Bereich.

b) Mittels einer an gegeneinander versetzten an der Oberseite und der Unterseite des Stapels (3) liegenden Fixpunkten (85, 86) angreifenden Gabel oder dergleichen werden die metallbeschichteten gegensinnig verschlungenen und anschließend mit einem Mantelrohr (87) versehen und verbunden.

15. Verfahren zur Herstellung eines Wabenkörpers, insbesondere Katalysator-Trägerkörpers, nach Anspruch 11, gekennzeichnet durch folgende Merkmale:

a) Eine geeignete Anzahl zumindest teilweise strukturierter Bleche (1, 2) wird zu einem Stapel (3) geschichtet.

b) Mittels einer Gabel oder dergleichen, welche an den an der Oberseite und der Unterseite des Stapels (3) liegenden Fixpunkten (5, 6) angreift, wird der Stapel (3) gegensinnig verschlungen.

c) Der verschlungene Stapel wird in ein Mantelrohr (7) eingesetzt oder mit einem solchen umwickelt.

d) Die Enden der zumindest teilweise strukturierten Bleche (1, 2) werden, falls für die folgenden Schritte erforderlich, fügetechnisch oder formschlüssig etwa in der Mitte des Mantelrohres in Umfangsrichtung befestigt, vorzugsweise durch eine in Umfangsrichtung um das Mantelrohr (7) verlaufende Schweißnaht.

e) Mit einem Stempel oder dergleichen wird der Zentralbereich des Wabenkörpers zu einer Stirnseite herausgedrückt.

f) Weitere fügetechnische und/oder formschlüssige Verbindungen der Bleche zum Mantelrohr werden hergestellt.

16. Verfahren nach Anspruch 12, 13, 14 oder 15, dadurch gekennzeichnet, daß die Enden der strukturierten Bleche (1, 2; 71, 72) mit dem Mantelrohr (7; 37; 47; 87) verlötet werden, indem das Mantelrohr innenseitig mit Lot versehen und nach dem Einbringen der strukturierten Bleche (1, 2; 71, 72) von außen aufgeheizt wird, beispielsweise durch Induktionsspulen, Infrarotbestrahlung oder dergleichen.

**Claims**

1. Honeycomb body, more particularly catalyst carrier body, consisting of metal sheets (1, 2) which are arranged in layers, are at least in part structured and form a plurality of channels, through which gases can flow, the metal sheets being surrounded by a jacket tube (7) which may consist of several segments, and being connected with the latter by joining techniques, characterised by the following features:

a) The honeycomb consists of a stack (3) of at least in part structured metal sheets (1, 2).

b) The ends of the stack are twisted in mutually opposite directions about at least two fixation points (5, 6; 35, 36; 45, 46; 85, 86).

c) The ens of the metal sheets (1, 2) are connected by joining techniques and/or in a formclosing manner with the jacket tube (7).

2. Honeycomb body according to claim 1 for round cross-sectional forms, characterised in that the spacing of the fixation points (5, 6) and with that the height (h) of the stack (3) and the length (L) of the stack (3) in relation to the radius (R) of the honeycomb body obey the following conditions:

$$a)\ h = \frac{2R}{n}$$

$$b)\ L = \frac{n}{2} \cdot R \cdot \pi$$

with $n \geq 2$, preferably $9 \geq n \geq 3$, where n does not need to be a whole number.

3. Honeycomb body according to claim 1, characterised in that for longitudinally extended cross sections the fixation points (35, 36; 85, 86; 135, 136) lie staggered in respect of the stack (3).

4. Honeycomb body according to claim 1, 2 or 3, characterised in that the at least in part structured metal sheets (1, 2) are brazed one with the other on the end surfaces at least in partial regions, preferably in a narrow marginal zone region (38; 48).

5. Honeycomb body according to claim 1, 2, 3 or 4, characterised in that the at least in part structured metal sheets (1, 2) are alternately arranged smooth (1) and corrugated (2) metal sheets.

6. Honeycomb body according to claim 5, characterised in that the smooth metal sheets (1) are slightly longer than the corrugated metal sheets (2) and on both sides project out over the corrugated metal sheets (2) by a short length (d).

7. Honeycomb body according to claim 5, characterised in that the corrugated metal sheets (2) have at their end straight sections (52) which run substantially in the centre between the adjacent smooth metal sheets (1).

8. Honeycomb body according to claim 1, 2, 3 or 4, characterised in that the at least in part structured metal sheets are alternately arranged corrugated metal sheets (71, 72), the corrugation of which forms one with the other a small angle ($\alpha$) so that in each case a few of the channels formed by the corrugations intersect each other under the angle ($\alpha$), preferably $\alpha = 5°$ to $30°$.

9. Honeycomb body according to one of the preceding claims, characterised in that the metal sheets (1, 2; 71, 72) are connected with the jacket tube at their ends by welded seams running substantially in a peripheral direction, in which case it is possible to intensify the stability further by welded seams projecting somewhat inwards on account of their form-closure.

10. Honeycomb body according to one of the preceding claims, characterised in that for oval or irregular cross-sectional forms, which cannot be completely filled in with a stack of metal sheets twisted in opposite directions, filling pieces (81) are integrated in the honeycomb body, which pieces, for their part, are in turn wound or layered out of at least in part structured metal sheets (1, 2).

11. Honeycomb body according to one of the claims 1 to 8, characterised in that the metal sheets (1, 2; 71, 72) are pressed out in the central region of the honeycomb body to form a face so that a quasi-round-conical face form is present.

12. Method for producing a honeycomb body, more particularly catalyst carrier body to claim 1 or 2, characterised by the following features:
   a) A suitable number of at least in part structured metal sheets (1, 2) is layered to form a stack (3).
   b) The stack (3) is twisted in opposite directions by means of one or two fork-like device(s) which acts (or act) on fixation points (5, 6) lying on the upper side and lower side of the stack (3).
   c) The twisted stack is inserted into a jacket tube (7) or is wrapped with such a tube.
   d) The ends of the at least in part structured metal sheets (1, 2) are connected, preferably brazed, by joining techniques and/or in a form-closing manner with the jacket tube (7).

13. Method for producing a honeycomb body, more particularly catalyst carrier body, according to claim 3, characterised by the following features:
   a) At least in part structured metal sheets (1, 2) are stacked up to form a stack (3), this stack having a substantially rectangular or parallelogram-shaped cross section.
   b) The metal sheet layers are twisted in opposite directions by means of a fork or the like acting on staggered fixation points (35, 36; 45, 46; 135, 136) lying on the upper side and lower side of the stack (3) and are subsequently provided and connected with a jacket tube (37; 47).

14. Method for producing a honeycomb body, more particularly a catalyst carrier body, according to claim 10, characterised by the following features:
   a) A suitable number of at least in part structured metal sheets (1, 2) is layered to form a stack (3), one or several filling pieces (81) being inserted into the stack, preferably substantially in the central region.
   b) The metal sheet layers are twisted in opposite directions by means of a fork or the like acting on staggered fixation points (85, 86) lying on the upper side and the lower side of the stack (3) and are subsequently provided and connected with a jacket tube (87).

15. Method for producing a honeycomb body, more particularly a catalyst carrier body, according to claim 11, characterised by the following features:
   a) A suitable number of at least in part structured metal sheets (1, 2) is layered to form a stack (3).
   b) The stack (3) is twisted in opposite directions by means of a fork or the like which acts on the fixation points (5, 6) lying on the upper side and the lower side of the stack (3).
   c) The twisted stack is inserted into a jacket tube (7) or wrapped with such a tube.
   d) The ends of the at least in part structured metal sheets (1, 2) are, if necessary for the following steps, secured by joining techniques or in a form-closing manner substantially in the centre of the jacket tube in the peripheral direction, preferably by means of a welded seam running in the peripheral direction about the jacket tube (7).
   e) The central region of the honeycomb body is pressed out with a stamp or the like to form a face.
   f) Further connections achieved by joining techniques and/or in a form-closing manner of the metal sheets in respect of the jacket tube are established.

16. Method according to claim 12, 13, 14 or 15, characterised in that the ends of the structured metal sheets (1, 2; 71, 72) are brazed with the jacket tube (7; 37; 47; 87) in that the jacket tube is provided on the inside with brazing material and after the insertion of the structured metal sheets (1, 2; 71, 72) is heated from outside, for example by means of induction coils, infrared radiation or the like.

## Revendications

1. Corps en forme de nid d'abeilles, notamment support de catalyseur, constitué de tôles (1, 2) qui sont disposées en couches, qui sont stucturées au moins partiellement et qui forment un grand nombre de canaux dans lesquels peuvent passer des gaz, les tôles étant entourées d'un tube-enveloppe (7) constitué éventuellement de plusieurs segments et étant reliées à celui-ci par la technique d'assemblage, remarquable par les caractéristiques suivantes:
   a) Le corps en forme de nid d'abeilles est constitué d'une pile (3), de tôles (1, 2) au moins partiellement structurées.
   b) Les extrémités de la pile sont entrelacées ou repliées en boucles de sens contraire autour d'au moins deux points fixes (5, 6; 35, 36; 45, 46; 85, 86).
   c) Les extrémités de tôles (1, 2) sont reliées au tube-enveloppe (7) par la technique d'assemblage et/ou par complémentarité de forme.

2. Corps en forme de nid d'abeilles suivant la revendication 1, pour des formes de section transversale ronde, caractérisé en ce que la distance entre les points fixes (5, 6) et donc la hauteur (h) de la pile (3) et la longueur (L) de la pile (3) par rapport au rayon (R) des corps en forme de nid d'abeilles satisfont au conditions suivantes.

$$a)\ h = \frac{2R}{n}$$

$$b)\ L = \frac{n}{2} \cdot R \cdot \pi$$

avec $n \geq 2$, de préférence $9 \geq n \geq 3$, n pouvant ne pas être un nombre entier.

3. Corps en forme de nid d'abeilles suivant la revendication 1, caractérisé en ce que pour des sections transversales oblongues, les points fixes (35, 36; 85, 86; 135, 136) sont décalés l'un par rapport à l'autre par rapport à la pile (3).

4. Corps en forme de nid d'abeilles suivant la revendication 1, 2 ou 3, caractérisé en ce les tôles (1, 2) structurées au moins partiellement sont soudées entre elles au moins dans des régions partielles, de préférence dans une région marginale étroite (38; 48).

5. Corps en forme de nid d'abeilles suivant la revendication 1, 2, 3 ou 4, caractérisé en ce que les tôles (1, 2) structurées au moins partiellement sont des tôles planes (1) et ondulées (2) disposées de manière alternée.

6. Corps en forme de nid d'abeilles suivant la revendication 5, caractérisé en ce que les tôles planes (1) sont légèrement plus longues que les tôles ondulées (2) et dépassent des deux côtés les tôles ondulées (2) d'une faible longueur (d).

7. Corps en forme de nid d'abeilles suivant la revendication 5, caractérisé en ce que les tôles ondulées (2) comportent à leur extrémité des tronçons droits (52) qui s'étendent à peu près au milieu entre les tôles planes (1) voisines.

8. Corps en forme de nid d'abeilles suivant la revendication 1, 2, 3 ou 4, caractérisé en ce que les tôles au moins partiellement structurées sont des tôles ondulées (71, 72) qui sont disposées de manière alternée et dont les ondulations forment entre elles un angle ($\alpha$) petit, de sorte que certains des canaux formés par les ondulations se croisent en faisant entre eux l'angle ($\alpha$), $\alpha$ étant de préférance compris entre 5° et 30°.

9. Corps en forme de nid d'abeilles suivant l'une des revendications précédentes, caractérisé en ce que les tôles (1, 2; 71, 72) sont reliées au tube-enveloppe à leurs extrémités par des cordons de soudure s'étendant sensiblement dans la direction périphérique, la solidité pouvant être encore renforcée par des cordons de soudure faisant saillie quelque peu vers l'intérieur, en raison de leur complémentarité de forme.

10. Corps en forme de nid d'abeilles suivant l'une des revendications précédentes, caractérisé en ce que pour des formes de section transversale ovale ou irrégulière, qui ne peuvent pas être remplies complètement d'une pile de tôles repliées en boucles de sens contraire, des pièces de remplissage (81) sont intégrées au corps en forme de nid d'abeilles et sont à leur tour constituées à nouveau de tôles (1, 2) au moins partiellement structurées qui sont enroulées ou qui sont empilées.

11. Corps en forme de nid d'abeilles suivant l'une des revendications 1 à 8, caractérisé en ce que les tôles (1, 2; 71, 72) sont dans la partie centrale du corps en forme de nid d'abeilles refoulées à l'extérieur vers un côté frontal de manière à donner au côté frontal une forme conique quasiment ronde.

12. Procédé de fabrication d'un corps en forme de nid d'abeilles, notamment d'un support des catalyseur, suivant la revendication 1 ou 2, remarquable par les caractéristiques suivantes:

a) On empile un nombre convenable de tôles (1, 2) structurées au moins partiellement en une pile (3).

b) Au moyen d'un ou de deux dispositifs de type à fourche qui agissent sur des pointes fixes (5, 6) se trouvant sur le côté supérieur et sur le côté inférieur de la pile (3), on replie la pile (3) en boucles de sens contraire.

c) On introduit la pile repliée en boucles de sens contraire dans un tube-enveloppe (7) ou on l'entoure d'un tube-enveloppe de ce genre.

d) On relie, de préférence par soudage, des extrémités des tôles (1, 2) structurées au moins partiellement au tube-enveloppe (7) par une technique d'assemblage et/ou par complémentarité de forme.

13. Procédé de fabrication d'un corps en forme de nid d'abeilles, notamment d'un support des catalyseur, suivant la revendication 3, remarquable par les caractéristiques suivantes:

a) On empile les tôles (1, 2) structurées au moins partiellement en une pile (3), cette pile ayant une section transversale sensiblement rectangulaire ou en forme de parallélogramme.

b) Au moyen d'une fourche ou d'un outil analogue, agissant sur des points fixes (35, 36; 45, 46; 135, 136) disposés sur le côté supérieur et sur le côté inférieur de la pile (3) en étant décalés l'un par rapport à l'autre, on replie des couches de tôles métalliques en boucles de sens contraire et ensuite on les munit d'un tube-enveloppe (37; 47) et on les relie à celui-ci.

14. Procédé de fabrication d'un corps en forme de nid d'abeilles, notamment d'un support de catalyseur suivant la revendication 10, remarquable par les caractéristiques suivantes:

a) On empile un nombre convenable de tôles (1, 2) structurées au moins partiellement en une pile (3), en insérant dans la pile une ou plusieurs pièces de remplissage (81), de préférence sensiblement dans la partie médiane.

b) Au moyen d'une fourche ou d'un outil analogue agissant sur des points fixes (85, 86) se trouvant sur le côté supérieur et sur le côté inférieur de la pile (3) et décalés l'un par rapport à l'autre, on replie des couches métalliques en boucles de sens contraire et ensuite on les munit d'un tube-enveloppe (87) et on les relie à celui-ci.

15. Procédé de fabrication d'un corps en forme de nid d'abeilles, notamment d'un support des catalyseur, suivant la revendication 11, remarquable par les caractéristiques suivantes:

a) On empile un nombre convenable de tôles (1, 2) structurées au moins partiellement en une pile (3).

b) Au moyen d'une fourche ou d'un outil analogue, qui agit sur des points fixes (5, 6) se trouvant sur le côté supérieur et sur le côté inférieur de la pile (3), on replie la pile (3) en boucles de sens contraire.

c) On introduit la pile repliée en boucles dans un tube-enveloppe (7) ou on l'entoure d'un tube de ce genre.

d) On fixe les extrémités des tôles (1, 2) au moins partiellement structurées, dans le cas où c'est nécessaire pour les stades suivants, par la technique d'assemblage ou par complémentarité de forme sensiblement au milieu du tube-enveloppe dans la direction périphérique, de préférence par un cordon de soudure s'étendant autour du tube-enveloppe (7) dans la direction périphérique.

e) On refoule à l'extérieur vers un côté frontal, à l'aide d'un poinçon ou d'un outil analogue, la partie centrale du corps en forme de nid d'abeilles.

f) On ménage d'autres liaisons par la technique d'assemblage et/ou par complémentarité de forme, entre les tôles et le tube-enveloppe.

16. Procédé suivant la revendication 12, 13, 14 ou 15, caractérisé en ce que l'on soude les extrémités des tôles structurées (1, 2; 71, 72) au tube-enveloppe (7; 37; 47; 87) en munissant le tube-enveloppe du côté intérieur de soudure et en le chauffant de l'extérieur, par exemple par des bobines d'induction, un rayonnement infrarouge ou d'une manière analogue, après l'introduction des tôles (1, 2; 71, 72) structurées.

F I G 1

F I G 2

FIG 3

FIG 4

FIG 5

FIG 6

FIG 7

FIG 8

FIG 9

FIG 10

FIG 11

FIG 12

FIG 13